# DEMANDE DE BREVET EUROPEEN

(11) **EP 1 271 340 A1**
(43) Date de publication de la demande: **02.01.2003**
(21) Numéro de dépôt: 01125503.1
(22) Date de dépôt: 25.10.2001
(51) Int. Cl.: G06F 17/28

(54) **Procédé et dispositif de traduction**

(30) Priorité: 22.06.2001 FR 0108713
(71) Demandeur: Mestre, Pierre, 34170 Castelnau-le-Lez (FR)
(72) Inventeur: Mestre, Pierre, 34170 Castelnau-le-Lez (FR)

(57) **Abrégé**

La présente invention concerne un procédé et un dispositif de traduction de mots et/ou d'expressions (110A, 110B) d'au moins une langue d'origine dans au moins une langue de destination, dans lesquels, pour chaque mot ou expression dans au moins une langue d'origine, et pour chaque langue de destination (121A, 121B), sont fournis simultanément au moins :
- une première écriture phonétique de la traduction dudit mot ou de ladite expression dans ladite langue de destination (141A, 141B), et
- une deuxième écriture phonétique de ladite traduction dudit mot ou de ladite expression dans ladite langue de destination (151A, 151B), ladite deuxième écriture phonétique étant différente de ladite première écriture phonétique.

## Description

La présente invention concerne un procédé et un dispositif de traduction. Elle s'applique notamment à des livres, des logiciels et des sites en ligne.

Les dictionnaires, logiciels et sites actuellement connus proposent à l'utilisateur de choisir un mot, une expression ou une phrase dans une langue d'origine et de lire sa traduction dans une langue de destination.

Un premier problème vient de ce que l'écriture phonétique de l'expression dans la langue de destination, qui est parfois fournie, est soit dans le code d'écriture phonétique international API, ce qui est illisible pour le grand public, soit sous forme d'écriture phonétique approchée dans la langue d'origine, ce qui limite la lecture dans la langue de destination aux sons pouvant être lus dans la langue d'origine. Par exemple, les sons « eu» ou «on » prononcés en français ne peuvent être transcrits phonétiquement en anglais.

Un deuxième problème concerne les pays où plusieurs langues sont utilisées, pour lesquels les dictionnaires actuellement connus n'offrent pas de traduction en plusieurs langues de destination sans changer de page. De même, lorsque plusieurs langues d'origine peuvent être utilisées par plusieurs utilisateurs, plusieurs dictionnaires sont actuellement nécessaires.

L'inventeur a découvert qu'il y avait un besoin pour choisir une ou des expressions parmi un ensemble d'expressions contextuelles (c'est-à-dire pouvant être utilisées conjointement dans une circonstance donnée, par exemple dans un hôtel ou en boîte de nuit). L'inventeur a aussi découvert un besoin pour visualiser au moins deux écritures phonétiques de la traduction dans la langue de destination. L'inventeur a aussi découvert qu'il y avait un besoin pour visualiser sur la même page, les traductions du même mot ou de la même expression en au moins deux langues. L'inventeur a aussi découvert qu'il y avait un besoin pour sélectionner conjointement un ensemble de mots et/ou d'expressions dans la langue d'origine et une langue de destination pour visualiser, sur la même page, les traductions, dans la langue de destination de tous les mots et/ou expressions dudit ensemble. L'inventeur a aussi découvert qu'il y avait un besoin pour visualiser simultanément au moins deux langues d'origine pour la même expression.

Selon une premier aspect, la présente invention vise un procédé de traduction de mots et/ou d'expressions d'au moins une langue d'origine dans au moins une langue de destination, procédé dans lequel, pour chaque mot ou expression dans au moins une langue d'origine, et pour chaque langue de destination, sont fournis simultanément au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Grâce à ces dispositions, l'utilisateur qui connaît, même approximativement, la prononciation de au moins deux langues peut trouver, par recoupement, la prononciation du mot ou de l'expression dans la langue de destination.

Il convient ici de noter que l'invention ne porte par sur une présentation d'information, dans laquelle la forme de la présentation de l'information serait différente, mais sur une méthode de traduction phonétique, à base écrite, plus efficace que ce qui existait dans l'art antérieur et qui donne le résultat technique que l'utilisateur contrôle mieux la prononciation des mots et expressions traduits sans avoir à apprendre d'alphabet phonétique international API.

Conjointement à son premier aspect, la présente invention vise un livre de traduction de mots et/ou d'expressions d'au moins une langue d'origine dans au moins une langue de destination, livre qui fournit, pour chaque mot ou expression dans au moins une langue d'origine, et pour chaque langue de destination, sur la même page ou sur deux pages successives dont la première a un numéro pair, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Conjointement à son premier aspect, la présente invention vise un site de traduction de mots et/ou d'expressions d'au moins une langue d'origine dans au moins une langue de destination, site qui fournit, pour chaque mot ou expression dans au moins une langue d'origine, et pour chaque langue de destination, sur la même page, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Conjointement à son premier aspect, la présente invention vise un logiciel de traduction de mots et/ou d'expressions d'au moins une langue d'origine dans au moins une langue de destination, logiciel qui fournit, pour chaque mot ou expression dans au moins une langue d'origine, et pour chaque langue de destination, simultanément, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.
de traduction, caractérisé en ce que, pour chaque mot ou expression dans la langue d'origine, il fournit, sur le même écran de lecture que ledit mot ou ladite expression dans la langue d'origine, au moins deux écritures phonétiques de sa traduction dans la langue de destination.

Conjointement au premier aspect de la présente invention, celle-ci vise un support d'information de traduction de mots et/ou d'expressions d'au moins une langue d'origine dans au moins une langue de destination, support qui conserve, pour chaque mot ou expression dans au moins une langue d'origine, et pour chaque langue de destination, simultanément au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Conjointement au premier aspect de la présente invention, celle-ci vise un support d'information de traduction de mots et/ou d'expressions d'au moins une langue d'origine dans au moins une langue de destination, support d'information qui conserve des instructions d'un programme qui fournit simultanément, pour chaque mot ou expression dans au moins une langue d'origine, et pour chaque langue de destination, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Conjointement à son premier aspect, la présente invention vise un dispositif de traduction de mots et/ou d'expressions d'au moins une langue d'origine dans au moins une langue de destination, comportant un support d'information écrite, qui affiche simultanément, pour chaque mot ou expression dans au moins une langue d'origine, et pour chaque langue de destination, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

Selon un premier exemple préférentiel, les écritures phonétiques de la traduction dans la langue de destination du mot ou de l'expression dans la langue d'origine, comportent d'une part une écriture phonétique dans la langue d'origine et, d'autre part, en anglais. Selon un autre exemple, les écritures phonétiques de la traduction dans la langue de destination du mot ou de l'expression dans la langue d'origine, comportent d'une part une écriture phonétique dans la langue d'origine et, d'autre part, en écriture phonétique internationale. Selon un autre exemple, les écritures phonétiques de la traduction dans la langue de destination du mot ou de l'expression dans la langue d'origine, comportent d'une part une écriture phonétique internationale et, d'autre part, une écriture phonétique en anglais. Selon un autre exemple, les écritures phonétiques de la traduction dans la langue de destination du mot ou de l'expression dans la langue d'origine, comportent d'une part une écriture phonétique dans la langue d'origine, d'autre part, en anglais et, encore d'autre part, en écriture phonétique internationale.

Selon des caractéristiques particulières, le procédé succinctement exposé ci-dessus comporte, sur la même page, dans la langue d'origine, un ensemble de mots et/ou expressions relatives à la même situation dans laquelle peut se trouver l'utilisateur.

Selon des caractéristiques particulières, le procédé succinctement exposé ci-dessus fournit, pour chaque mot ou expression dans la langue d'origine, une traduction dans au moins deux langues sur la même page.

Selon des caractéristiques particulières, le procédé succinctement exposé ci-dessus comporte un moyen de sélection d'un ensemble de mots et/ou d'expressions dans une langue d'origine, un moyen de sélection d'une langue de destination et une opération de mise en regard de l'ensemble de mots et/ou expressions dans la langue d'origine et d'une page comportant les traductions dans la langue de destination de tous les mots et expressions dans la langue d'origine.

Selon des caractéristiques particulières, le procédé succinctement exposé ci-dessus comporte, pour chaque mot ou expression, sur la même page, sa traduction dans au moins trois langues.

Selon un deuxième aspect, la présente invention vise un procédé de traduction caractérisé en ce qu'il comporte, sur la même page, dans la langue d'origine, un ensemble de mots et/ou expressions relatives à la même situation dans laquelle peut se trouver l'utilisateur.

Grâce à ces dispositions, un utilisateur qui se trouve dans une situation donnée, visualise simultanément les mots et/ou expressions qui peuvent lui être utiles et n'a pas besoin de manipulation entre les utilisations successives de ces mots et/ou expressions.

Selon des caractéristiques particulières du procédé succinctement exposé ci-dessus fournit, pour chaque mot ou expression dans la langue d'origine, simultanément au moins deux écritures phonétiques de sa traduction dans la langue de destination.

Selon des caractéristiques particulières, le procédé succinctement exposé ci-dessus fournit, pour chaque mot ou expression dans la langue d'origine, une traduction dans au moins deux langues sur la même page.

Selon des caractéristiques particulières, le procédé succinctement exposé ci-dessus comporte un moyen de sélection d'un ensemble de mots et/ou d'expressions dans une langue d'origine, un moyen de sélection d'une langue de destination et une opération de mise en regard de l'ensemble de mots et/ou expressions dans la langue d'origine et d'une page comportant les traductions dans la langue de destination de tous les mots et expressions dans la langue d'origine.

Selon des caractéristiques particulières, le procédé succinctement exposé ci-dessus comporte, pour chaque mot ou expression, sur la même page, sa traduction dans au moins trois langues.

Selon un troisième aspect, la présente invention vise un procédé de traduction, caractérisé en ce qu'il fournit, pour chaque mot ou expression dans la langue d'origine, une traduction dans au moins deux langues sur la même page.

Grâce à ces dispositions, l'utilisateur peut choisir, sans changer de page, dans quelle langue de destination, il va s'exprimer.

Selon des caractéristiques particulières, le procédé succinctement exposé ci-dessus comporte, sur la même page, dans la langue d'origine, un ensemble de mots et/ou expressions relatives à la même situation dans laquelle peut se trouver l'utilisateur.

Selon des caractéristiques particulières, le procédé succinctement exposé ci-dessus fournit, pour chaque mot ou expression dans la langue d'origine, simultanément au moins deux écritures phonétiques de sa traduction dans la langue de destination.

Selon des caractéristiques particulières, le procédé succinctement exposé ci-dessus comporte un moyen de sélection d'un ensemble de mots et/ou d'expressions dans une langue d'origine, un moyen de sélection d'une langue de destination et une opération de mise en regard de l'ensemble de mots et/ou expressions dans la langue d'origine et d'une page comportant les traductions dans la langue de destination de tous les mots et expressions dans la langue d'origine.

Selon des caractéristiques particulières, le procédé succinctement exposé ci-dessus comporte, pour chaque mot ou expression, sur la même page, sa traduction dans au moins trois langues.

Selon une quatrième aspect, la présente invention vise un procédé de traduction, caractérisé en ce qu'il comporte un moyen de sélection d'un ensemble de mots et/ou d'expressions dans une langue d'origine, un moyen de sélection d'une langue de destination et une opération de mise en regard de l'ensemble de mots et/ou expressions dans la langue d'origine et d'une page comportant les traductions dans la langue de destination de tous les mots et expressions dans la langue d'origine.

Grâce à ces dispositions, l'utilisateur peut choisir sans manipulation intermédiaire, une succession de mots et/ou d'expressions pour s'exprimer dans la langue de destination.

Selon des caractéristiques particulières, le procédé succinctement exposé ci-dessus comporte, sur la même page, dans la langue d'origine, un ensemble de mots et/ou expressions relatives à la même situation dans laquelle peut se trouver l'utilisateur.

Selon des caractéristiques particulières, le procédé succinctement exposé ci-dessus fournit, pour chaque mot ou expression dans la langue d'origine, simultanément au moins deux écritures phonétiques de sa traduction dans la langue de destination.

Selon des caractéristiques particulières, le procédé succinctement exposé ci-dessus fournit, pour chaque mot ou expression dans la langue d'origine, une traduction dans au moins deux langues sur la même page.

Selon des caractéristiques particulières, le procédé succinctement exposé ci-dessus comporte, pour chaque mot ou expression, sur la même page, sa traduction dans au moins trois langues.

Selon un cinquième aspect, la présente invention vise un procédé de traduction caractérisé en ce qu'il comporte, pour chaque mot ou expression, sur la même page, sa traduction dans au moins trois langues.

Grâce à ces dispositions, des utilisateurs maîtrisant différentes langues peuvent utiliser les mêmes pages.

Selon des caractéristiques particulières, le procédé succinctement exposé ci-dessus comporte, sur la même page, dans la langue d'origine, un ensemble de mots et/ou expressions relatives à la même situation dans laquelle peut se trouver l'utilisateur.

Selon des caractéristiques particulières, le procédé succinctement exposé ci-dessus fournit, pour chaque mot ou expression dans la langue d'origine, simultanément au moins deux écritures phonétiques de sa traduction dans la langue de destination.

Selon des caractéristiques particulières, le procédé succinctement exposé ci-dessus fournit, pour chaque mot ou expression dans la langue d'origine, une traduction dans au moins deux langues sur la même page.

Selon des caractéristiques particulières, le procédé succinctement exposé ci-dessus comporte un moyen de sélection d'un ensemble de mots et/ou d'expressions dans une langue d'origine, un moyen de sélection d'une langue de destination et une opération de mise en regard de l'ensemble de mots et/ou expressions dans la langue d'origine et d'une page comportant les traductions dans la langue de destination de tous les mots et expressions dans la langue d'origine.

Chacun des aspects de la présente invention s'applique aussi bien à un livre de traduction, à un site informatique, par exemple connecté au réseau Internet, à un logiciel de traduction, à un support d'information, par exemple un compact disque, ou une disquette contenant des instruction de programme et/ou des données permettant la mise en oeuvre de la présente invention telle que succinctement exposée ci-dessus.

D'autres avantages, buts et caractéristiques de la présente invention ressortiront à la lecture de la description qui va suivre, faite dans un but explicatif et nullement limitatif, en regard des dessins annexés dans lesquels :
- la figure 1 représente une page fournie par la mise en oeuvre d'un aspect de la présente invention,
- la figure 2 représente des pages en regard obtenues par la mise en oeuvre d'un aspect de la présente invention, et
- la figure 3 représente une succession d'opérations mises en oeuvre conformément à un aspect de la présente invention.

Dans toute la description, on appelle page un ensemble d'informations qui sont visualisées simultanément par un utilisateur. Ainsi, deux pages en vis-à-vis dans le même livre constituent, au sens de la présente invention, la même page. Ces pages peuvent être, selon des modes de réalisation exemplaires, dans un même livre ou affichées sur un écran d'un dispositif électronique, par exemple un ordinateur portable ou non ou un traducteur électronique.

Dans toute la description, on appelle écriture phonétique dans une langue, une écriture qui permet à un lecteur connaissant ladite langue, de prononcer un mot ou une expression dans une autre langue. Par exemple, une écriture phonétique en anglais du mot français « chaise » est « shase ». L'écriture phonétique en alphabet phonétique international (« API ») est aussi une écriture phonétique au sens de la présente invention.

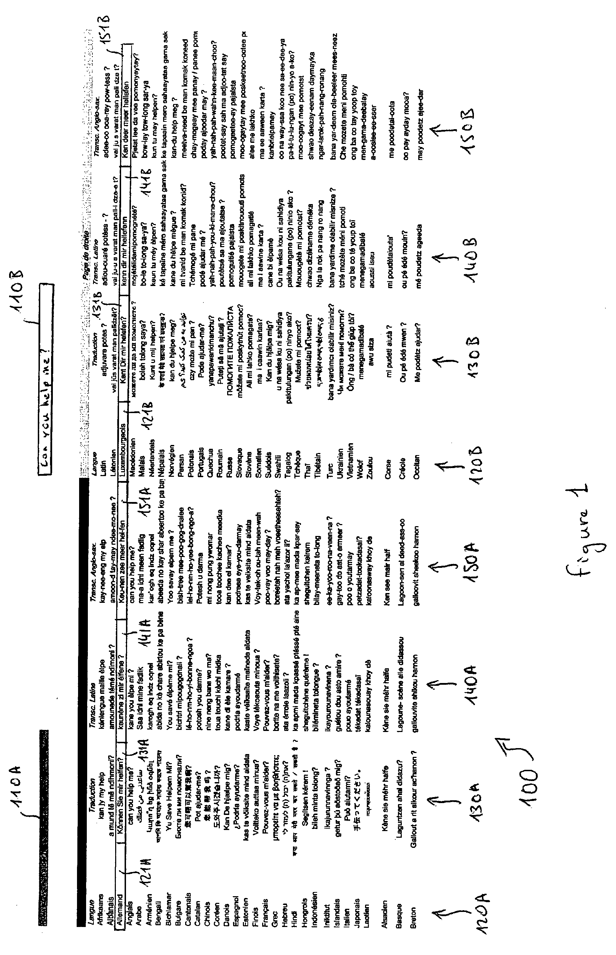

En figure 1 est représentée une page 100 qui peut être, par exemple, dans un livre, affichée par un logiciel ou affichée sur un site en ligne, par exemple sur Internet, conformément à un aspect de la présente invention. La page 100 comporte un en-tête 110 indiquant un mot ou une expression dans au moins une langue d'origine, ici le français, partie 110A de l'en-tête, et l'anglais, partie 110B de l'en-tête. La page 100 comporte aussi :
- deux colonnes 120A et 120B dans lesquelles se trouvent, sur chaque ligne, une indication de langue de destination, dans des cases respectivement notées 121A et 121B,
- deux colonnes 130A et 130B dans lesquelles se trouvent, sur chaque ligne, l'écriture de la traduction de l'expression indiquée dans l'entête 110 dans la langue correspondant à l'indication de langue indiquée dans la case, respectivement 121A et 121B, de la même ligne dans la colonne 120A et 120B, dans des cases respectivement notées 131A et 131B,
- deux colonnes 140A et 140B dans lesquelles se trouvent, sur chaque ligne, l'écriture phonétique en français des traductions présentes dans les cases 131A et 131B, dans des cases respectivement notées 141A et 141B,
- deux colonnes 150A et 150B dans lesquelles se trouvent, sur chaque ligne, l'écriture phonétique en anglais des traductions présentes dans les cases 131 A et 131B, dans des cases respectivement notées 151A et 151B,

Ainsi, l'utilisateur voit, sur la même ligne, et dans l'ordre de gauche à droite, l'indication de la langue de destination, case 121A, la traduction écrite de l'expression placée en en-tête dans la langue de destination, case 131A, l'écriture phonétique en français de cette traduction dans la langue de destination, case 141A, et l'écriture phonétique en anglais de cette traduction dans la langue de destination, case 151A.

Dans des variantes, ce qui est présenté en page 100 est réparti sur deux pages en vis-à-vis, l'entête 110 A et les colonnes 120A, 130A, 140A et 150A se trouvant sur une page de gauche et l'entête 110B et les colonnes 120B, 130B, 140B et 150B se trouvant sur une page de droite.

Selon des variantes, l'une des écritures phonétiques est selon en alphabet phonétique internationale ("API") ou une autre transcription phonétique. Ainsi les écritures phonétiques utilisées peuvent être :
- en API et en anglais,
- dans la langue d'origine et en anglais,
- dans la langue d'origine, en anglais et en API,
- dans la langue d'origine en en anglais,
- en API, en anglais et en français,
- en anglais et en espagnol,
- en API, en anglais et en espagnol,
- en API et en espagnol.

Dans les modes de réalisation exposés en regard de la figure 1 :
- le procédé et le dispositif de traduction fournissent simultanément au moins deux écritures phonétiques de sa traduction dans au moins une langue de destination ;
- le procédé et le dispositif de traduction fournissent, fournit, pour chaque mot ou expression dans au moins une langue d'origine, une traduction dans au moins deux langues sur la même page ;

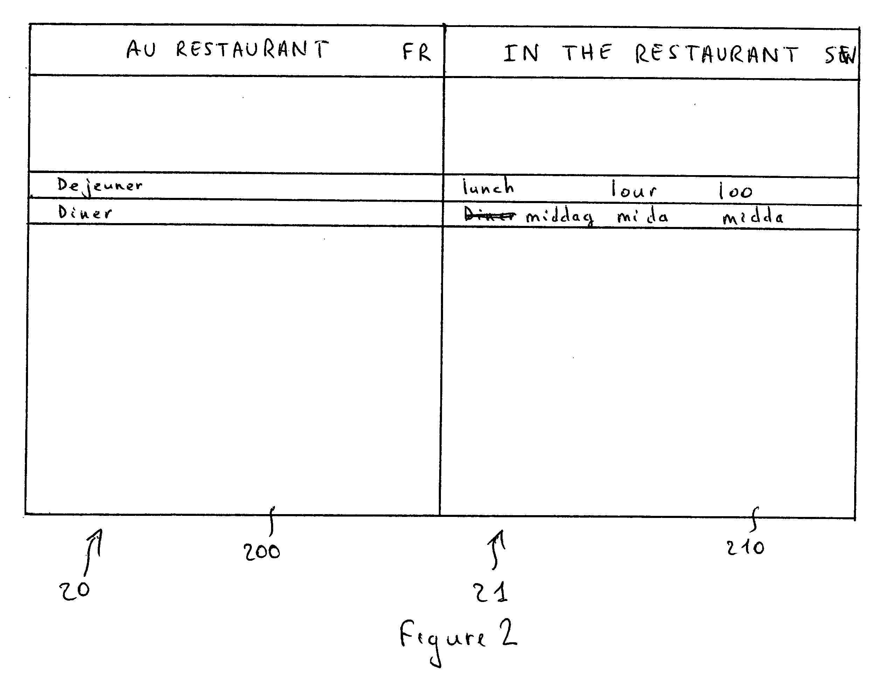

En figure 2 sont représentées des pages ou portions de page de 200 et 210 qui peuvent être, par exemple, en regard dans un livre les deux pages ayant des numéros successifs dont le premier est pair, affichées simultanément par un logiciel ou affichées simultanément sur un site en ligne, par exemple sur Internet, conformément à un aspect de la présente invention. Les pages 200 et 210 sont dans deux groupes de pages 20 et 21, respectivement, qui peuvent être sélectionnées séparées mais qui sont mises en regard automatiquement.

Par exemple, le groupe de pages 20 et le groupe 21 sont montés, parallèlement, sur une charnière (qui serait horizontale et en bordure des pages 200 et 210, en figure 2) de telle manière que les pages du groupe 20 pivotent sur le même axe que les pages du groupe 21, mais sans que la rotation d'une page du groupe 20 bloque la rotation d'une page du groupe 21. Selon un autre exemple, le groupe de pages 20 et le groupe de pages 21 se trouvent reliées sur la même reliure (par exemple sur la droite de la page 210 en figure 2) mais les pages du groupe 20 peuvent se déplier pour faire apparaître les portions de pages, telles que la page 200.

La page 200 comporte, pour une langue particulière, une série de mots et/ou d'expressions relatives à au moins une situation dans laquelle peut se trouver l'utilisateur (à l'hôtel, commander des titres de transports, en boîte, au magasin, politesses et civilités, mots courants, les présentations, en voyage, au restaurant, dans un fête, culture/spectacles, à la banque, à la poste, heures et dates, dans la rue/directions, les urgences, sports et loisirs.)

D'autres pages du groupe de pages 20 comporte, soit pour d'autres langues particulières, soit pour d'autres situations, d'autres séries de mots et d'expression.

De même, pour les pages du groupe 21, sachant que si plus de deux langues sont utilisées, les langues et les situations des groupes de pages 20 et 21 se recouvrent.

Ainsi, selon un exemple, le groupe 20 comporte, en français, des pages correspondant chacune à un ensemble de situations et en anglais, des pages correspondant chacune à un ensemble de situations et le groupe 21 comporte, en anglais, des pages correspondant chacune à un ensemble de situations et, en espagnol, des pages correspondant chacune à un ensemble de situations. Dans cet exemple, la sélection des bonnes pages permet d'effectuer les traductions entre le français et anglais, entre l'anglais et l'espagnol et entre le français et l'espagnol. Dans des modes de réalisation exemplaires, les langues des groupes de page 20 et 21 sont identiques.

Les mots et expression des pages 200 et 210 qui sont les traductions les unes des autres sont en regard entre les pages 200 et 210.

On observe que des code de couleur ou des onglets peuvent être utilisés pour repérer aisément les situations et les langues relatives aux pages. Préférentiellement, chaque page du groupe 21 comporte simultanément au moins deux écritures phonétiques de sa traduction dans la langue représentée dans la page 210.

Dans des modes de réalisation illustrés en figure 2 :
- pour chaque mot ou expression dans au moins une langue d'origine, le procédé et le dispositif fournissent simultanément au moins deux écritures phonétiques de sa traduction dans au moins une langue de destination ;
- le procédé et le dispositif fournissent, sur la même page, dans au moins une langue d'origine, un ensemble de mots et/ou expressions relatives à la même situation dans laquelle peut se trouver l'utilisateur et leurs traductions dans au moins une langue de destination ;
- le procédé et le dispositif comportent une opération de sélection d'un ensemble de mots et/ou d'expressions dans au moins une langue d'origine, une opération de sélection d'au moins une langue de destination et une opération de mise en regard de l'ensemble de mots et/ou expressions dans chaque langue d'origine et d'une page comportant les traductions dans chaque langue de destination, de tous les mots et expressions.

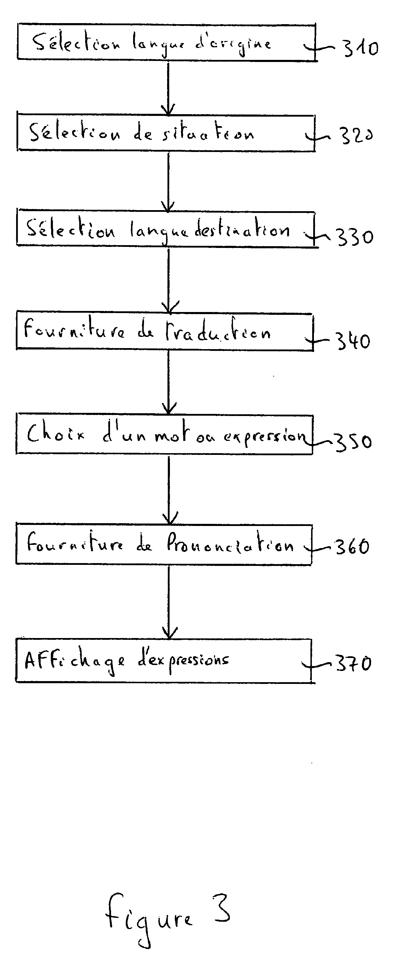

En figure 3 sont représentées des opérations mises en oeuvre par un logiciel, par exemple conservé sur un support d'information de type compact disque ou disquette, ou sur un site en ligne, par exemple sur internet. Au cours d'une opération 310, l'utilisateur sélectionne une langue d'origine. Au cours d'une opération 320, l'utilisateur sélectionne une situation (par exemple parmi les situations décrites en regard de la figure 2), parmi des situations décrites dans la langue d'origine. Au cours d'une opération 330, l'utilisateur choisit une langue de destination. Au cours d'une opération 340, le logiciel ou le site accède à une base de données, par exemple conservée sur le même support d'information que le logiciel ou le site, fournit la traduction écrite dans la langue de destination des mots et/ou expression relatifs à la situation sélectionnée au cours de l'opération 320. Préférentiellement, le logiciel ou le site fournit aussi au moins deux écritures phonétiques desdits mots, par exemple, dans la langue d'origine, en anglais, et/ou en API. En variante, l'utilisateur choisi, au cours d'une opération non représentée, les écritures phonétiques dont il souhaite disposer et le logiciel ou le site suit ce choix.

Au cours d'une opération 350, l'utilisateur choisit l'un des mots ou l'une des expression. Au cours d'une opération 360, le logiciel ou le site fournit la prononciation du mot ou de l'expression choisi, par exemple, par l'intermédiaire d'un fichier son.

Au cours d'une opération 370, le logiciel ou le site affiche, dans la langue d'origine, d'autres mots et/ou expressions qui sont en relation avec le mot ou l'expression choisie, même si ces mots et/ou expression ne sont pas dans la liste fournie au cours de l'opération 340.

## Revendications

1. Procédé de traduction de mots et/ou d'expressions d'au moins une langue d'origine (110A, 110B) dans au moins une langue de destination (121A, 121B), **caractérisé en ce que**, pour chaque mot ou expression dans au moins une langue d'origine, et pour chaque langue de destination, sont fournis simultanément au moins :
- une première écriture phonétique de la traduction dudit mot ou de ladite expression dans ladite langue de destination (141A, 141B), et
- une deuxième écriture phonétique de ladite traduction dudit mot ou de ladite expression dans ladite langue de destination (151A, 151B), ladite deuxième écriture phonétique étant différente de ladite première écriture phonétique.

2. Procédé selon la revendication 1, dans lequel sont fournis, sur la même page (20, 21), dans au moins une langue d'origine, un ensemble de mots et/ou expressions relatives à la même situation dans laquelle peut se trouver l'utilisateur et, pour chaque mot ou expression, sa traduction dans au moins une langue de destination.

3. Procédé selon l'une quelconque des revendications 1 ou 2, dans lequel est fourni sur la même page (100), pour chaque mot ou expression dans au moins une langue d'origine, une traduction dans au moins deux langues différentes.

4. Procédé selon l'une quelconque des revendications 1 à 3, ledit procédé comportant une opération de sélection (320) d'un ensemble de mots et/ou d'expressions dans au moins une langue d'origine, une opération de sélection d'au moins une langue de destination (330) et une opération de mise en regard (340) de l'ensemble de mots et/ou expressions dans chaque langue d'origine et d'une page comportant les traductions dans chaque langue de destination, de tous les mots et expressions.

5. Procédé selon l'une quelconque des revendications 1 à 4, dans lequel est fourni sur la même page (100), pour chaque mot ou expression, sa traduction dans au moins deux langues de destination (121A, 121B).

6. Dispositif de traduction de mots et/ou d'expressions d'au moins une langue d'origine dans au moins une langue de destination, comportant un support d'information écrite, qui affiche simultanément, pour chaque mot ou expression dans au moins une langue d'origine, et pour chaque langue de destination, au moins :
- une première écriture phonétique de la traduction dudit mot ou de ladite expression dans ladite langue de destination, et
- une deuxième écriture phonétique de ladite traduction dudit mot ou de ladite expression dans ladite langue de destination, ladite deuxième écriture phonétique étant différente de ladite première écriture phonétique.

7. Dispositif selon la revendication 6, dans lequel le support d'information fournit, sur la même page, dans au moins une langue d'origine, un ensemble de mots et/ou expressions relatives à la même situation dans laquelle peut se trouver l'utilisateur et leurs traductions dans au moins une langue de destination.

8. Dispositif selon l'une quelconque des revendications 6 ou 7, dans lequel le support d'information fournit, sur la même page, pour chaque mot ou expression dans au moins une langue d'origine, une traduction dans au moins deux langues.

9. Dispositif selon l'une quelconque des revendications 6 à 8, **caractérisé en ce qu'**il comporte un moyen de sélection d'un ensemble de mots et/ou d'expressions dans au moins une langue d'origine, un moyen de sélection d'au moins une langue de destination et un moyen de mise en regard de l'ensemble de mots et/ou expressions dans chaque langue d'origine et d'une page comportant les traductions dans chaque langue de destination, de tous les mots et expressions dans la langue d'origine.

10. Dispositif selon l'une quelconque des revendications 6 à 9, dans lequel le support d'information fournit, pour chaque mot ou expression, sur la même page, la traduction dudit mot ou de ladite expression dans au moins deux langues de destination.
